# FASCICULE DE BREVET EUROPEEN

(11) **EP 1 230 769 B1**
(45) Date de publication et mention de la délivrance du brevet: **05.10.2005**
(21) Numéro de dépôt: 00976110.7
(22) Date de dépôt: 06.11.2000
(51) Int. Cl.: H04L 12/66

(54) **METHODE ET SYSTEME DE TRANSMISSION DE TRAMES ETHERNET DANS UN RESEAU SDH**
VERFAHREN UND SYSTEM FÜR TRANSMISSION DER ETHERNETRAHMEN IN EINEM SDH-NETZ
METHOD AND SYSTEM FOR TRANSMITTING ETHERNET FRAMES IN A SDH NETWORK

(30) Priorité: 19.11.1999 FR 9914691
(43) Date de publication de la demande: 14.08.2002
(73) Titulaire: FRANCE TELECOM, 75015 Paris (FR)
(72) Inventeur: LOUSSOUARN, Yann, F-22300 Lannion (FR); CHATTER, Frédéric, F-22140 Tonquedec (FR); FOURNIER, Alain, Kerligonan F-22300 Lannion (FR)
(74) Mandataire: Maillet, Alain
(86) Numéro de dépôt international: PCT/FR2000/003088
(87) Numéro de publication internationale: WO 2001/037498

(56) Documents cités:
- EP-A- 0 924 901
- WO-A-97/09827
- US-A- 5 896 382

## Description

La présente invention concerne l'interconnexion entre un réseau local de type Ethernet et un réseau SDH, en particulier un anneau de fibres optiques SDH, au moyen de conteneurs virtuels VC d'ordre inférieur concaténés, en mettant en oeuvre une adaptation de trames Ethernet transportant au moins des paquets ou des paquets partiels, ou notamment des datagrammes IP (Internet Protocol) en trames en mode binaire synchrone, ou inversement une adaptation de trames en mode binaire synchrone en trames Ethernet transportant des datagrammes IP. La présente invention concerne aussi les moyens de réaliser cette adaptation laquelle est une véritable traduction ou son inverse. Dans la suite des présentes, on dira simplement qu'une trame Ethernet transporte des datagrammes IP.

L'invention propose également une architecture de réseau permettant de réaliser des réseaux virtuels IP (Internet Protocol) Ethernet, à routage déporté aux extrémités, qui sont constitués de plusieurs réseaux locaux IP Ethernet, lesquels sont interconnectés à longue distance, en utilisant des anneaux SDH classiques et la concaténation virtuelle de conteneurs virtuels VC SDH d'ordre inférieur.

Par ailieurs, dans la demande de brevet français 99 04852 déposée le 14.04.99 par la société FRANCE TELECOM et intitulée « Système d'accès à un réseau synchrone du type qui comprend un équipement émetteur et un équipement récepteur », on a décrit un système d'émission et de réception SDH de conteneurs virtuels VC d'ordre inférieur concaténés. Comme on l'a mentionné dans cette demande de brevet, les données qui se présentent à l'entrée de l'équipement émetteur peuvent exister sous divers formats, en particulier ce peut être des signaux numériques à large bande du type binaire NRZ, c'est-à-dire des signaux qui ont été adaptés physiquement sous forme binaire NRZ. On rappelle également que, s'il s'agit de données binaires de type NRZ, la mémoire tampon de l'équipement émetteur fournit les données utiles DU sous la forme d'un ou plusieurs blocs d'octets et, si les données utiles ne sont pas disponibles en quantité souhaitée, qu'elle ajoute des données de bourrage B.

Comme avantage, le système, décrit dans cette demande de brevet, permet d'optimiser les ressources de transmission des réseaux SDH en maximisant le taux de remplissage des VC et en économisant des ressources de multiplexage SDH, en particulier s'il est raccordé à un anneau de MIE (multiplexeur d'insertion et d'extraction) SDH. Mais, comme inconvénient, ce système ne décrit pas comment transporter des datagrammes IP dans les conteneurs virtuels VC concaténés et, donc, dans un réseau SDH.

On connaît aussi diverses autres techniques qui permettent le transport de datagrammes IP dans la SDH et qui consistent essentiellement à intégrer aux équipements SDH existants des fonctions de routage IP en utilisant des protocoles PPP (point to point protocole) ou MLPPP (multilink point to point protocole), ou, plus simplement, de pont Ethernet . Il existe encore d'autres techniques qui s'appuient sur l'adaptation des flux IP dans une couche intermédiaire ATM, avant d'être transportés par la SDH.

Ces autres techniques, mentionnées ci-dessus, permettent le transport de datagrammes IP dans la SDH mais, quand on les applique à des réseaux SDH déjà installés, ils imposent des modifications coûteuses sur les infrastructures existantes. Par exemple, ils nécessitent l'adjonction de fonctions de routage IP ou de fonctions de pont Ethernet, dans les MIE, ce qui implique bien souvent le remplacement pur et simple des MIE concernés, car ils n'ont pas été prévus à l'origine pour intégrer ces nouvelles fonctions. De plus, en introduisant ces nouvelles fonctions au coeur du réseau SDH, on complique singulièrement sa gestion, car, en plus de la couche physique SDH, il faut gérer la couche IP ou la fonction pont d'Ethernet par les mêmes gestionnaires.

L'adaptation Ethernet - binaire synchrone et l'architecture suivant l'invention permettent :
- de transporter des flux IP via des VC concaténés et ainsi d'optimiser les ressources de transmission utilisées des réseaux SDH, en maximisant le taux de remplissage des VC et en économisant des ressources de multiplexage SDH, en particulier quand on est raccordé à un anneau de MIE SDH,
- de relier plusieurs réseaux locaux Ethernet pour former un réseau virtuel Ethernet longue distance via un réseau SDH existant,
- de transporter de façon synchrone des flux Ethernet qui sont par définition asynchrones,
- de ne pas compliquer les réseaux SDH car les fonctions IP ne sont pas traitées dans le réseau SDH mais dans chaque réseau local : les infrastructures SDH existantes n'ont donc pas à être modifiées et l'adaptation en sortie des routeurs des réseaux locaux s'en trouve facilitée.

Enfin, le fait de déporter les fonctions de routage IP dans chaque réseau local assure une protection efficace contre les effets d'éventuelles intrusions malveillantes dans le réseau d'interconnexion SDH : ni les trames Ethernet, ni les datagrammes IP ne sont facilement accessibles dans le réseau SDH.

Un objet de la présente invention consiste à prévoir la méthode et les moyens permettant d'interfacer un réseau local Ethernet fonctionnant à 10 ou 100 Mbit/s (fast Ethemet) et un dispositif de concaténation de VC SDH d'ordre inférieur décrit dans la demande de brevet citée dans le préambule de manière à faire transmettre des trames Ethernet transportant des datagrammes IP, qui sont à l'origine asynchrones, par un réseau SDH, c'est-à-dire par un réseau synchrone, et inversement.

Un autre objet de l'invention consiste à permettre l'interconnexion entre eux de plusieurs réseaux locaux au moyen d'un anneau SDH constitué de MIE (multiplexeurs à insertion extraction de VC).

Suivant une caractéristique de la présente invention, il est prévu une méthode d'adaptation qui substitue à une trame Ethernet, transportant des datagrammes IP, délivrée par un réseau local Ethernet une trame composée de données binaires de type NRZ, dans laquelle au champ « préambule » est substitué un champ « mot particulier », le reste de la trame étant inchangé, ledit « mot particulier » étant destiné à être reconnu.

Suivant une autre caractéristique de l'invention, il est prévu une méthode de restitution, après substitution suivant la méthode d'adaptation mentionnée ci-dessus, qui consiste, après reconnaissance du champ « mot particulier » de la trame de données binaires de type NRZ, à restituer une trame Ethernet transportant des datagrammes IP et à la délivrer à un réseau local Ethernet récepteur.

Suivant une autre caractéristique de l'invention, il est prévu un adaptateur d'émission monté en série entre un réseau local Ethernet et un circuit d'émission de concaténation de VC SDH, lequel adaptateur d'émission comprend, en série, un composant Ethernet, un circuit PAL et un circuit d'adaptation, le composant Ethernet recevant la trame Ethernet du réseau local Ethernet et délivrant un signal de données binaires et un signal d'horloge, plus un signal « valide » qu'il transmet au circuit PAL qui, quand le signal « valide » est à « 0 », transmet des « 0 » et quand le signal « valide » est à « 1 », mémorise partiellement la trame Ethernet à partir du champ « début » et engendre un champ « mot particulier », qu'il transmet au circuit d'adaptation qui adapte la trame de données binaires reçue sous forme binaire NRZ.

Suivant une autre caractéristique de l'invention, il est prévu un adaptateur de réception monté en série entre un circuit d'émission de concaténation de VC SDH et un réseau local Ethernet, lequel adaptateur d'émission comprend, en série, un circuit d'adaptation, un circuit PAL et un composant Ethernet, le circuit d'adaptation recevant les données entrantes « lignes » et la liaison d'horloge qui apporte le rythme de ces données, et les transmet au circuit PAL qui comporte trois sorties qui transmettent l'horloge, les données et un signal « valide » au composant Ethernet lequel est relié au routeur du réseau local Ethernet, le rôle du circuit PAL consistant à rechercher le mot particulier, si ce mot particulier n'est pas reconnu, le circuit mettant le signal « valide » à « 0 », s'il est reconnu, mémorisant la trame transmise, puis procédant à la lecture du champ « longueur », activant un compteur qui prend en compte cette longueur, et faisant passer le signal « valide » à « 1 » et simultanément, reconstituant le champ « préambule », puis présentant le reste de la trame vers le routeur du réseau local Ethernet, enfin, faisant revenir le signal « valide » à « 0 » dès que le compteur du champ « longueur » est à « 0 ».

Suivant une autre caractéristique de l'invention, il est prévu une installation comportant un circuit d'émission comprenant, en série, un réseau local Ethernet, un circuit d'émission selon une caractéristique ci-dessus et un équipement d'émission de concaténation de VC SDH, et un circuit de réception comprenant, en série, un équipement de réception de déconcaténation de VC SDH, un circuit de réception selon une autre caractéristique ci-dessus et ledit réseau local Ethernet.

Suivant une autre caractéristique de l'invention, il est prévu l'installation ci-dessus comportant, dans le circuit d'émission, ledit adaptateur d'émission et, dans le circuit de réception, ledit adaptateur de réception.

Les caractéristiques de l'invention mentionnées ci-dessus, ainsi que d'autres, apparaîtront clairement à la lecture de la description suivante d'exemples de réalisation, ladite description étant faite en relation avec les dessins joints, parmi lesquels
la Fig. 1 est une bloc-diagramme d'un circuit d'émission suivant l'invention
la Fig. 2 est un schéma représentant une trame émise par un réseau local Ethernet,
la Fig. 3 est un bloc-diagramme d'un adaptateur d'émission, suivant l'invention, qui fait partie du circuit d'émission de la Fig. 1,
la Fig. 4 est un schéma du signal délivré à la sortie de l'adaptateur d'émission de la Fig. 3,
la Fig. 5 est un bloc-diagramme montrant un dispositif d'émission connu qui effectue la concaténation de VC SDH et qui fait partie du circuit d'émission de la Fig. 1,
la Fig. 6 est un bloc-diagramme d'un circuit de réception suivant l'invention,
la Fig. 7 est un bloc-diagramme montrant un dispositif de réception connu_qui effectue la réception de VC SDH et qui fait partie du circuit de réception de la Fig. 6,
la Fig. 8 est un bloc-diagramme d'un adaptateur de réception suivant l'invention, qui fait partie du circuit de réception de la Fig. 6, et
la Fig. 9 est une représentation d'un réseau virtuel Ethernet ...

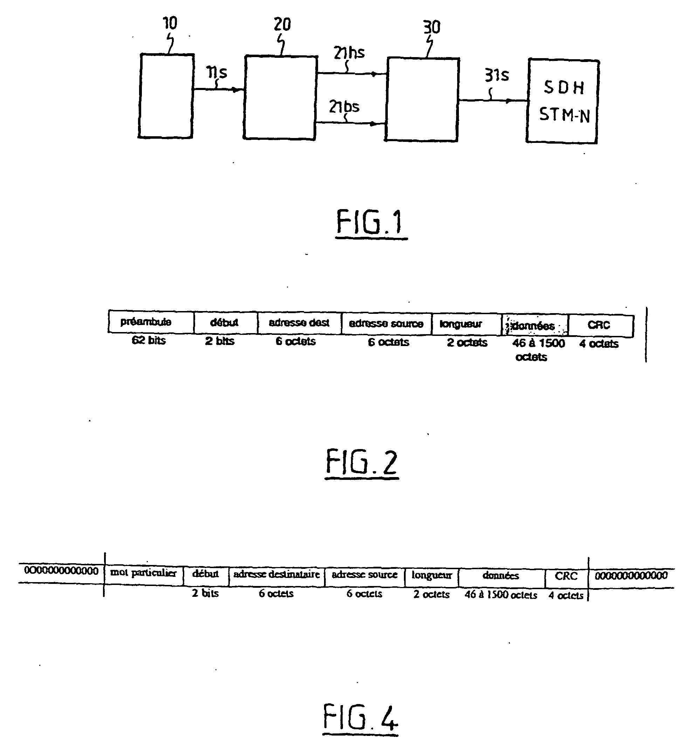

On a représenté, dans le bloc-diagramme du circuit d'émission de la Fig. 1, un routeur 10 d'un réseau local Ethernet qui est relié, par une ligne sortante 11s, à un adaptateur d'émission 20, suivant l'invention, qui est lui-même relié, par une ligne sortante de données binaires 21bs et une ligne sortante d'horloge 21hs, à un dispositif d'émission 30 de concaténation de VC SDH qui est lui-même relié, par une ligne sortante 31s, à un réseau SDH classique, non montré, qui transporte des trames STM-N, par exemple STM-1.

Le diagramme de la Fig. 2 représente une trame Ethernet délivrée à la sortie du réseau local Ethernet par le routeur 10 et transmise, par la liaison 11s, à l'entrée de l'adaptateur d'émission 20.

On rappelle que les trames Ethernet sont émises, d'une manière asynchrone, au débit de 10 Mbit/s (ou de 100 Mbit/s) à l'entrée du dispositif d'émission 20 qui a pour objet de constituer un train synchrone à 10 Mbits (ou à 100 Mbit/s) de données utiles ou « données lignes » et une horloge associée de 10 Mbit/s (ou 100 Mbit/s), puis d'adapter physiquement ces signaux sous forme binaire NRZ + rythme au format ECL.

A l'entrée de l'adaptateur d'émission 20, sur la liaison 11s, la trame est constituée, comme le montre la Fig. 2, des champs suivants : « préambule » de 62 bits, suivi d'un « début » de 2 bits, d'une « adresse destinataire » de 6 octets, d'une « adresse source » de 6 octets, d'un champ de « longueur » de 2 octets, d'un champ de « données » dont la longueur est variable de 46 à 1500 octets, et enfin d'un champ de « CRC » de 4 octets. A noter que le champ de « données » peut contenir un ou plusieurs datagrammes, ou une ou plusieurs parties de datagrammes.

Le bloc-diagramme de la Fig. 3 montre l'adaptateur d'émission 20 de la Fig. 1, qui comprend, en série, un composant Ethernet 40, un circuit PAL 41 et un circuit d'adaptation 42.

La liaison 11s est reliée à l'entrée du composant Ethernet 40 qui comporte trois sorties reliées respectivement à une liaison d'horloge 43h, à une liaison 43d et à une liaison 43 v qui sont toutes trois reliées aux entrées correspondantes du circuit PAL 41. La liaison 43d sert à transmettre successivement les trames Ethernet appliquées par la liaison 11s. A la sortie du composant Ethernet 40, celui-ci délivre sur la liaison 43h le signal d'horloge à 10 Mhz (ou 100 Mhz) qui est récupéré sur le rythme de la trame reçue, sur la liaison 43d le signal de données en binaire et sur la liaison 43v un signal « valide » qui est à « 1 » si les 2 signaux précédents sont à prendre en compte, et à « 0 » dans le cas contraire. Le signal « valide » passe à « 1 » en général après 6 à 10 temps bit de la trame préambule compris. Après 1 bit et demi après le dernier bit de trame reçu, il passe à « 0 ».

La liaison 43h comporte également un circuit PLL qui sert à maintenir la fréquence du routeur 10, c'est-à-dire le 10 MHz (ou le 100 MHz), en cas d'absence prolongée de trame Ethernet sur la liaison 11s. La liaison 43h est également reliée à l'entrée d'horloge correspondante du circuit d'adaptation 42. La liaison 44d entre le circuit PAL 41 et le circuit d'adaptation 42 sert à transmettre les données « lignes ». La liaison 43v sert à transmettre le signal « valide »

Le circuit PAL 41 reçoit les 3 signaux décrits ci-dessus. Si le signal « valide » est à « 0 », le circuit 41 transmet des « 0 » sur la liaison 44d. Si le signal « valide » est à « 1 », le circuit 41 mémorise la trame Ethernet dans un registre, au rythme de l'horloge reçue, à partir du champ « début » de la trame de la Fig. 2. En effet, du fait du temps de latence égal à quelques temps bit du passage du signal « valide » à « 1 », on perd quelques bits du « préambule » de la trame de la Fig. 2. Le circuit 41 engendre alors sur la liaison 44d un mot au motif particulier (par exemple de 32 bits ou plus) connu du dispositif de réception, puis, à la suite, il transmet le reste de la trame de la Fig. 2 (à partir du champ « début »).

Le circuit d'adaptation 42 reçoit donc le signal d'horloge par la liaison 43h et le signal de données par la liaison 44d. Il a pour fonction d'adapter ces signaux et délivre un signal de rythme par la liaison 45hs et un signal binaire par la liaison 45bs.

Le schéma de la Fig. 4 montre le signal de données présent sur la liaison 44d, c'est le signal binaire sur la liaison 45bs à la sortie du circuit d'adaptation 42.

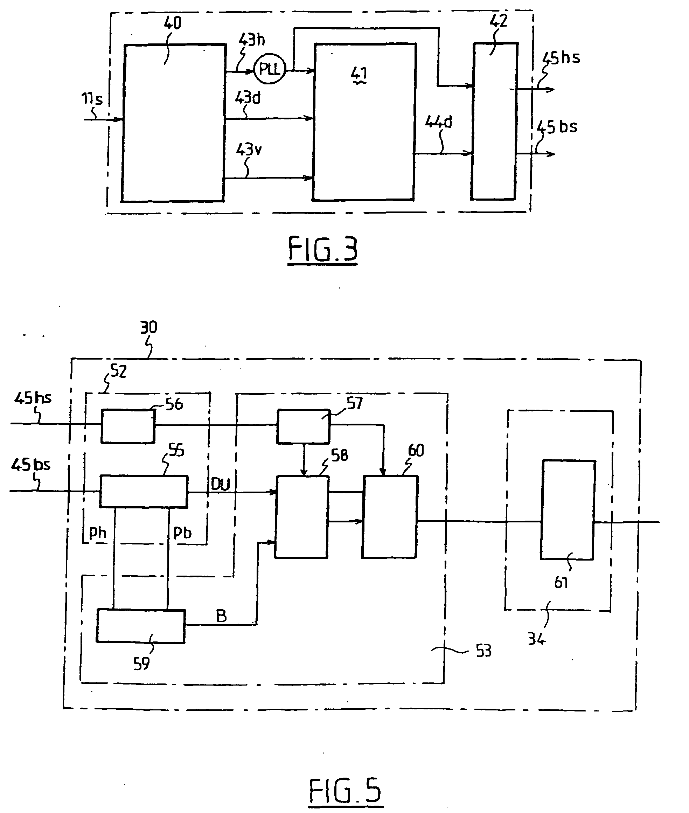

Dans le dispositif d'émission 30, Fig. 5, de concaténation de VC SDH, on distingue schématiquement une interface affluent 52, une section de traitement 53 et une interface SDH 54.

Le dispositif d'émission 30 comprend, comme le montre le bloc-diagramme de la Fig. 5, une mémoire tampon d'entrée 55 et une unité d'horloge d'entrée 56, qui forment ensemble la partie entrante de l'interface affluent 52, une unité de paramétrage 57, une unité 58 de formation de conteneurs, une unité de contrôle de débit 59 et une unité 60 de formation de conteneurs virtuels, qui constituent ensemble la section de traitement 53, et une unité d'émission 61 qui assure l'émission dans l'interface SDH 54.

Le dispositif 30 d'émission de la Fig. 5, qui vient d'être sommairement décrit, correspond à l'équipement émetteur 10 (en communication avec un équipement récepteur 20 par un réseau synchrone 30 du type SDH), tel qu'il est décrit à la Fig. 3 de la demande de brevet 99 04852 mentionnée ci-dessus. A ce titre, il s'agit d'un circuit connu.

Comme on l'a mentionné dans cette demande de brevet, les données qui se présentent à l'entrée de l'équipement émetteur 10 peuvent exister sous divers formats, en particulier ce peut être des signaux numériques à large bande du type binaire NRZ, c'est-à-dire des signaux qui ont été adaptés physiquement sous forme binaire NRZ au moyen du circuit d'adaptation 42 de l'adaptateur d'émission 20 de la présente invention, comme il a été mentionné ci-dessus. On rappelle également que l'on a mentionné dans la demande de brevet 99 04852 que, s'il s'agit de données binaires de type NRZ, la mémoire tampon fournit les données utiles DU sous la forme d'un ou plusieurs blocs d'octets, ou si les données utiles ne sont pas disponibles en quantité souhaitée, qu'elle ajoute des données de bourrage B.

La dimension des blocs d'octets dépend du format des données à insérer dans le conteneur. Pour des données binaires de type NRZ, un bloc correspondra aux octets qui sont nécessaires pour remplir la charge utile d'un sous-conteneur S-VC12 ou S-VC2, c'est-à-dire 33 ou 105 octets.

L'entrée 45bs par laquelle les données à transmettre sont appliquées à l'entrée de la mémoire tampon 55 délivre, à sa sortie, les données utiles DU à l'unité 58 de formation de conteneurs. L'unité de paramétrage 57 est pilotée par l'unité 56, qui reçoit le rythme par l'entrée 45hs et qui mesure ainsi le débit du flux de données appliquées par l'entrée 45bs.

La mémoire tampon 55, qui est généralement une mémoire du type FiFo, délivre également les valeurs respectives d'un pointeur haut ph et d'un pointeur bas pb représentatifs de son niveau de remplissage. Ces valeurs de pointeurs sont fournies à une unité de contrôle de débit 59 qui délivre à l'unité de formation de conteneurs 58 des données de bourrage B en fonction des niveaux de remplissage de la mémoire 55.

L'unité 58 a pour fonction de former au moyen des données utiles DU et des données de bourrage B des conteneurs C2 ou C12. Elle reçoit de l'unité de paramétrage 57 divers paramètres, comme le nombre de conteneurs à concaténer et le type de conteneurs C2 ou C12 à traiter.

L'unité 58 délivre les conteneurs C2 ou C12 qu'elle a formés à une unité de formation de conteneurs virtuels 60 qui est prévue pour ajouter des octets V5, J2, N2 et K4 aux conteneurs C2 ou C12 et, ainsi, former des conteneurs virtuels VC2 ou VC12. L'unité 60 reçoit de l'unité de paramétrage 57 un octet J2 qui constitue l'un des octets de sur-débit.

Les conteneurs virtuels ainsi formés sont délivrés à une unité d'émission 61 qui les insère dans des conteneurs VC4, qui projettent ceux-ci dans des trames STM-1 et transmettent ces trames STM-1 sur le réseau SDH, par l'intermédiaire de la ligne sortante 31s.

On rappelle que les conteneurs virtuels VC2 ou VC12 sont définis sur une multitrame SDH constituée de la succession de quatre trames STM-1 tandis que le conteneur virtuel VC4 est défini sur une trame STM-1

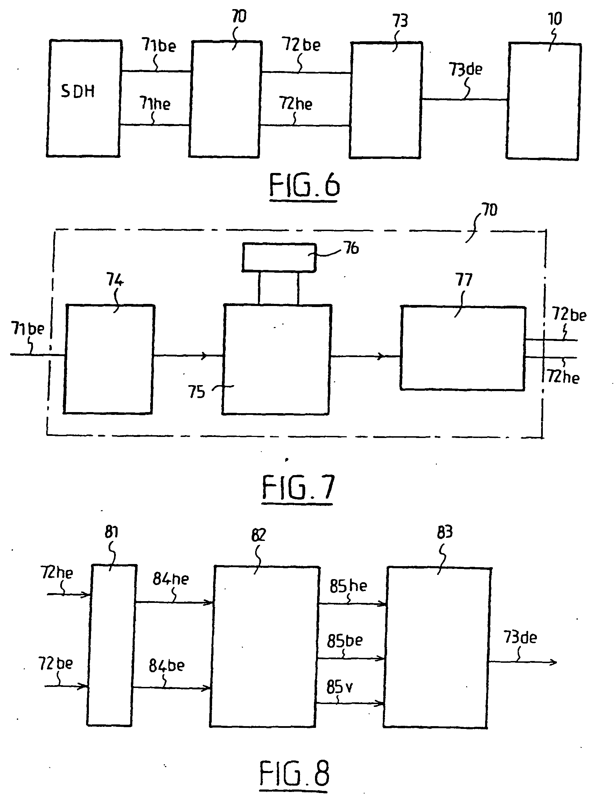

On a représenté, dans le bloc-diagramme de la Fig. 6, un circuit de réception, qui constitue le pendant du circuit d'émission de la Fig. 1, quand il est relié au même réseau local Ethernet, c'est-à-dire au même routeur 10. Ce circuit de réception est relié à un réseau SDH, qui lui transmet une trame STM-N, par exemple STM-1, et comprend un dispositif 70 de déconcaténation de VC SDH, qui est relié, d'une part, au réseau SDH, par une ligne entrant 71be, et relié, d'autre part, par une liaison 72be et une liaison d'horloge 72he, à un adaptateur de réception 73, qui lui-même est relié par une liaison 73 de au routeur 10 du réseau local Ethernet.

On rappelle que le circuit de réception, ou circuit de restitution, doit émettre, à partir d'un train synchrone SDH de « données lignes » et de son horloge associée appliquées à son entrée, des trames Ethernet restituées, délivrées à sa sortie, semblables à celle montrée à la Fig. 2.

Le bloc-diagramme de la Fig. 7 montre, plus en détail, l'équipement récepteur 70 de la Fig. 6. On y distingue une unité de réception 74, une unité 75 de recouvrement de conteneurs virtuels, une unité 76 d'analyse de sur-débit et une unité 77 de recouvrement de données. L'équipement récepteur 70 est identique à celui connu de la demande de brevet 99 04852, déjà mentionnée ci-dessus.

L'équipement récepteur 70 reçoit les trames SDH par la ligne 71be à l'entrée de données de l'unité de réception 74 dans laquelle, d'une manière connue, après interprétation des pointeurs PTR, qui ne sont pas nécessairement les mêmes que ceux qui sont déterminés par l'équipement émetteur de la Fig. 5, notamment du fait du passage des trames dans le réseau SDH, récupère les conteneurs VC4, puis les affluents TU2 ou TU12 qui sont contenus dans ces conteneurs VC4, et, après interprétation des pointeurs V1 et V2 correspondants, délivre des conteneurs virtuels VC2 ou VC12 à l'unité de recouvrement de conteneurs 75 qui est prévue pour recouvrir les conteneurs C2 ou C12 correspondants. L'unité 75 est pilotée par une unité d'analyse de sur-débit 76 qui analyse les octets de sur-débit V5, J2, N2 et K4, et lui permet d'extraire les seuls conteneurs C2 ou C12 issus de la concaténation. Enfin les conteneurs C2 ou C12 sont délivrés à l'unité de recouvrement de données 77 qui, d'une part, recouvre les données initiales et, d'autre part, récupère le rythme de sortie des données, qui est délivré par la liaison 72he et rend régulier le débit de données qui sont ensuite délivrées par la liaison 72be.

L'unité 77 peut être constituée d'une mémoire tampon FiFo dont l'écriture est synchrone des conteneurs C2 ou C12 délivrés par l'unité 75, cette écriture est donc sporadique. La lecture de la mémoire de l'unité 77 est asservie à son niveau de remplissage, ce qui rend le débit de sortie des données régulier.

Le bloc-diagramme de la Fig. 8 montre l'adaptateur de réception 73 de la Fig. 6. L'adaptateur 73 comporte, montés en série, un circuit d'adaptation 81, un circuit PAL 82 et un composant Ethernet 83. A l'entrée du circuit d'adaptation 81, la liaison 71be transmet les données entrantes « lignes » et la liaison d'horloge 71he le rythme de ces données. A la sortie du circuit d'adaptation 81, les liaisons 84be et 84he transmettent les données « lignes » et le signal d'horloge au circuit PAL 82. Le circuit PAL 82 a trois sorties 85he, 85be et 85v qui transmettent l'horloge, les données et un signal « valide » au composant Ethernet 83 lequel est relié au routeur 10 du réseau local Ethernet, par la liaison 73de.

Le rôle du circuit PAL 82 consiste à rechercher le mot particulier. Si ce mot particulier n'est pas trouvé, il transmet par 85v le signal « valide » mis à « 0 », s'il est trouvé, le circuit 82 mémorise la trame transmise par la liaison 72be, puis procède à la lecture du champ « longueur », active un compteur qui prend en compte cette longueur, et fait passer, par la liaison 85v, le signal « valide » à « 1 ». Simultanément, il reconstitue le champ « préambule », puis, en complément de la restitution, présente le reste de la trame sur la liaison 85be et, enfin, fait revenir, par la liaison 85v, le signal « valide » à « 0 » dès que le compteur du champ « longueur » est à « 0 ».

Dans la pratique, le circuit d'émission de la Fig. 1 et le circuit de réception de la Fig. 6 sont installés parallèlement l'un près de l'autre, celui-ci étant inversé de droite à gauche, de manière à ne constituer qu'un seul circuit entre le routeur 10 et le réseau SDH.

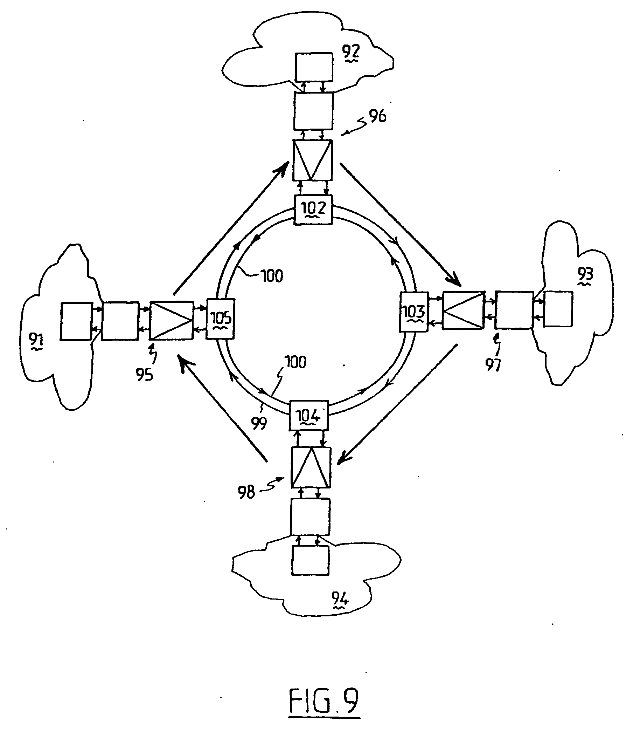

La représentation schématique de la Fig. 9 montre quatre réseaux locaux 91 à 94 qui sont respectivement reliés par quatre circuits identiques 95 à 98 à une paire de boucles de fibres optiques 99 et 100 par respectivement quatre dispositifs MIE 101 à 104. Les sens de propagation des fibres optiques 99 et 100 sont inversés. Chacun des circuits identiques 95 à 98 est identique à la combinaison du circuit d'émission de la Fig. 1 et du circuit de réception de la Fig. 6.

## Revendications

1. Procédé de transmission de trames asynchrones du type Ethernet via un réseau synchrone du type SDH (Synchronous Digital Hierarchy), ladite transmission étant effectuée entre un circuit d'émission (10, 20, 30) d'un réseau asynchrone émetteur (91, 92, 93, 94) et un circuit de réception (10, 70, 73) dudit réseau asynchrone ou d'un autre réseau asynchrone du même type, réseau asynchrone dit réseau asynchrone destinataire (91, 92, 93, 94), lesdites trames asynchrones comportant notamment un champ "préambule", **caractérisé en ce qu'**il consiste, dans le circuit d'émission (10, 20, 30), à recevoir lesdites trames asynchrones dudit réseau asynchrone émetteur, à insérer lesdites trames asynchrones dans des conteneurs virtuels VC d'une trame synchrone STM dudit réseau synchrone en ayant préalablement substitué audit champ 'préambule' de ladite trame asynchrone un mot particulier susceptible d'être reconnu par tout circuit de réception (10, 70, 73) d'un réseau asynchrone destinataire, à transmettre ladite trame synchrone via ledit réseau synchrone, et dans le circuit de réception (10, 70, 73), à la réception d'une trame synchrone transmise sur ledit réseau synchrone, recouvrir à partir des conteneurs virtuels VC de ladite trame synchrone STM lesdites trames asynchrones qu'ils contiennent, dites trames synchrones reçues, à rechercher dans chaque trame asynchrone reçue ledit mot particulier et, s'il n'est pas trouvé, à ne pas considérer ladite trame synchrone reçue et, s'il est trouvé, à considérer ladite trame synchrone reçue, reconstituer ledit champ 'préambule' afin de restituer ladite trame asynchrone et la délivrer sur ledit réseau synchrone destinataire.

2. Système de transmission de trames asynchrones du type Ethernet via un réseau synchrone du type SDH (Synchronous Digital Hierarchy), ledit système comprenant au moins un circuit d'émission (10, 20, 30) prévu pour être relié à un réseau asynchrone (91, 92, 93, 94) de manière à y recevoir lesdites trames asynchrones et au moins un circuit de réception (10, 70, 73) prévu pour être relié audit réseau asynchrone ou à un autre réseau asynchrone du même type pour y délivrer les trames asynchrones transmises, lesdites trames asynchrones comportant notamment un champ "préambule", **caractérisé en ce que** ledit ou chaque circuit d'émission (10, 20, 30) comporte des moyens (10) pour recevoir lesdites trames asynchrones du réseau asynchrone auquel il appartient, des moyens (41) pour substituer audit champ 'préambule' de ladite trame asynchrone un mot particulier susceptible d'être reconnu par tout circuit de réception (10, 70, 73) d'un réseau asynchrone destinataire et des moyens (30) pour insérer lesdites trames asynchrones dans des conteneurs virtuels VC d'une trame synchrone STM dudit réseau synchrone et **en ce que** le ou chaque circuit de réception (10, 70, 73) comporte des moyens (70) pour recevoir les trames synchrones transmises sur ledit réseau synchrone, des moyens (77) pour recouvrir à partir des conteneurs virtuels VC de ladite trame synchrone STM lesdites trames asynchrones qu'ils contiennent, dites trames synchrones reçues, des moyens (82) pour rechercher dans chaque trame asynchrone reçue ledit mot particulier et, s'il n'est pas trouvé, pour ne pas considérer ladite trame synchrone reçue et, s'il est trouvé, pour la considérer, pour reconstituer ledit champ 'préambule' afin de restituer ladite trame asynchrone et des moyens (83, 10) pour la délivrer sur ledit réseau synchrone destinataire.

3. Système de transmission de trames asynchrones du type Ethernet via un réseau synchrone du type SDH (Synchronous Digital Hierarchy) selon la revendication 2, **caractérisé en ce que** ledit circuit d'émission comporte un composant Ethernet (40) prévu pour recevoir ladite trame asynchrone du réseau asynchrone auquel il appartient et pour délivrer un signal de données binaires (43b) et un signal d'horloge (43h) ainsi qu'un signal de validation (43v) et un circuit PAL (41) qui reçoit ledit signal de validation (43v) et qui, quand ledit signal (43v) montre que ladite trame n'est pas à prendre en compte, délivre une suite de '0' et quand le signal de validation montre que ladite trame est à prendre en compte, engendre ledit mot particulier et mémorise partiellement ladite trame asynchrone Ethernet à partir de son champ 'début', ledit circuit PAL (41) délivrant alors ledit mot particulier ainsi que ladite partie de trame auxdits moyens (30) pour insérer lesdites trames asynchrones dans des conteneurs virtuels VC.

4. Système de transmission de trames asynchrones du type Ethernet via un réseau synchrone du type SDH (Synchronous Digital Hierarchy) selon la revendication 2 ou 3, **caractérisé en ce que** ledit circuit de réception comporte un adaptateur de réception (73) constitué d'un circuit PAL (82) ayant une sortie d'horloge (85he), une sortie de données (85be) et une sortie pour un signal 'valide' (85v), ledit circuit PAL (82) étant prévu pour rechercher ledit mot particulier dans ladite trame reçue, et positionner le signal 'valide' (85v) à '0' s'il n'est pas reconnu et, s'il est reconnu, pour mémoriser la trame reçue, lire la valeur contenue dans le champ 'longueur' de ladite trame, activer un compteur qui prend en compte cette valeur de longueur et faire passer le signal 'valide' (85v) à '1', pour reconstituer le champ 'préambule' puis compléter la restitution de ladite trame en présentant le reste de la trame vers ledit réseau asynchrone de destination, et enfin pour faire revenir ledit signal 'valide' (85v) à '0' dès que le compteur est '0'.

5. Circuit d'émission (10, 20, 30) d'un système de transmission de trames asynchrones du type Ethernet via un réseau synchrone du type SDH (Synchronous Digital Hierarchy), **caractérisé en ce qu'**il comporte des moyens (10) pour recevoir lesdites trames asynchrones du réseau asynchrone auquel il appartient, des moyens (41) pour substituer audit champ 'préambule' de ladite trame asynchrone un mot particulier susceptible d'être reconnu par tout circuit de réception (10, 70, 73) d'un réseau asynchrone destinataire des trames asynchrones et des moyens (30) pour insérer lesdites trames asynchrones dans des conteneurs virtuels VC d'une trame synchrone STM dudit réseau synchrone.

6. Circuit d'émission selon la revendication 5, **caractérisé en ce qu'**il comporte un composant Ethernet (40) prévu pour recevoir ladite trame asynchrone du réseau asynchrone auquel il appartient et pour délivrer un signal de données binaires (43b) et un signal d'horloge (43h) ainsi qu'un signal de validation (43v) et un circuit PAL (41) qui reçoit ledit signal de validation (43v) et qui, quand ledit signal (43v) montre que ladite trame n'est pas à prendre en compte, délivre une suite de '0' et quand le signal de validation montre que ladite trame est à prendre en compte, engendre ledit mot particulier et mémorise partiellement ladite trame asynchrone Ethernet à partir de son champ 'début', ledit circuit PAL (41) délivrant alors ledit mot particulier ainsi que ladite partie de trame auxdits moyens (30) pour insérer lesdites trames asynchrones dans des conteneurs virtuels VC.

7. Circuit de réception (10, 70, 73) d'un système de transmission de trames asynchrones du type Ethernet via un réseau synchrone du type SDH (Synchronous Digital Hierarchy), ledit système comprenant en outre au moins un circuit d'émission (10, 20, 30) prévu pour être relié à un réseau asynchrone (91, 92, 93, 94) de manière à y recevoir des trames asynchrones, ledit circuit d'émission comportant des moyens (30) pour insérer lesdites trames asynchrones dans des conteneurs virtuels VC d'une trame synchrone STM dudit réseau synchrone avec le champ 'préambule' substitué par un mot particulier susceptible d'être reconnu par ledit circuit de réception, **caractérisé en ce qu'**il comporte des moyens (70) pour recevoir les trames synchrones transmises sur ledit réseau synchrone, des moyens (77) pour recouvrir à partir des conteneurs virtuels VC de ladite trame synchrone STM des trames asynchrones qu'ils contiennent, dites trames synchrones reçues, des moyens (82) pour rechercher dans chaque trame asynchrone reçue ledit mot particulier et, s'il n'est pas trouvé, pour ne pas considérer ladite trame synchrone reçue et, s'il est trouvé, pour la considérer, pour reconstituer ledit champ 'préambule' afin de restituer ladite trame asynchrone et des moyens (83, 10) pour la délivrer sur ledit réseau synchrone destinataire.

8. Circuit de réception selon la revendication 7, **caractérisé en ce qu'**il comporte un adaptateur de réception (73) constitué d'un circuit PAL (82) ayant une sortie d'horloge (85he), une sortie de données (85be) et une sortie pour un signal 'valide' (85v), ledit circuit PAL (82) étant prévu pour rechercher ledit mot particulier dans ladite trame reçue, et positionner le signal 'valide' (85v) à '0' s'il n'est pas reconnu et, s'il est reconnu, pour mémoriser la trame reçue, lire la valeur contenue dans le champ 'longueur' de ladite trame, activer un compteur qui prend en compte cette valeur de longueur et faire passer le signal 'valide' (85v) à '1', pour reconstituer le champ 'préambule' puis compléter la restitution de ladite trame en présentant le reste de la trame vers ledit réseau asynchrone de destination, et enfin pour faire revenir ledit signal 'valide' (85v) à '0' dès que le compteur est à '0'.

## Patentansprüche

1. Verfahren zum Übertragen asynchroner Rahmen des Typs Ethernet über ein synchrones Netz des Typs SDH (Synchronous Digital Hierarchy), wobei die Übertragung zwischen einem Sendeschaltkreis (10, 20, 30) eines asynchronen Sendenetzes (91, 92, 93, 94) und einem Empfangsschaltkreis (10, 70, 73) des asynchronen Netzes oder einem anderen asynchronen Netz des gleichen Typs, asynchrones Empfangsnetz genannt (91, 92, 93, 94) erfolgt, wobei die asynchronen Rahmen insbesondere ein "Vorwort"-Feld umfassen, **dadurch gekennzeichnet, dass** es darin besteht, in dem Sendeschaltkreis (10, 20, 30) die asynchronen Rahmen des asynchronen Sendenetzes zu empfangen, die asynchronen Rahmen in virtuelle Behälter VC eines synchronen Rahmens STM des synchronen Netzes einzufügen, wobei man zuvor das "Vorwort"-Feld des asynchronen Rahmens durch ein besonderes Wort ersetzt, das von jedem Empfangsschaltkreis (10, 70, 73) eines asynchronen Empfangsnetzes erkannt werden kann, den synchronen Rahmen über das synchrone Netz zu übertragen und in dem Empfangsschaltkreis (10, 70, 73) beim Empfang eines auf dem synchronen Netz übertragenen synchronen Rahmens ausgehend von den virtuellen Behältern VC des synchronen Rahmens STM die asynchronen Rahmen, welche sie enthalten, empfangene synchrone Rahmen genannt, zu überdecken, in jedem empfangenen asynchronen Rahmen das besondere Wort zu suchen, und, wenn es nicht gefunden wird, den empfangenen synchronen Rahmen nicht zu berücksichtigen, und, wenn es gefunden wird, den empfangenen synchronen Rahmen zu berücksichtigen, das "Vorwort"-Feld wiederherzustellen, um den asynchronen Rahmen wiederzugeben und auf das synchrone Empfangsnetz zu liefern.

2. System zum Übertragen asynchroner Rahmen des Typs Ethernet über ein synchrones Netz des Typs SDH (Synchronous Digital Hierarchy), wobei das System mindestens einen Sendeschaltkreis (10, 20, 30) umfasst, der dazu vorgesehen ist, mit einem asynchronen Netz (91, 92, 93, 94) verbunden zu werden, so dass dort die asynchronen Rahmen empfangen werden, und mindestens einen Empfangsschaltkreis (10, 70, 73) der dazu vorgesehen ist, mit dem asynchronen Netz oder einem anderen asynchronen Netz des gleichen Typs verbunden zu werden, um dort die übertragenen asynchronen Rahmen zu liefern, wobei die asynchronen Rahmen insbesondere ein "Vorwort"-Feld umfassen, **dadurch gekennzeichnet, dass** der oder jeder Sendeschaltkreis (10, 20, 30) Mittel (10) umfasst, um die asynchronen Rahmen des asynchronen Netzes, zu dem er gehört, zu empfangen, Mittel (41) um das "Vorwort"-Feld des asynchronen Rahmens durch ein besonderes Wort zu ersetzen, das von jedem Empfangsschaltkreis (10, 70, 73) eines asynchronen Empfangsnetzes erkannt werden kann, und Mittel (30), um die asynchronen Rahmen in virtuelle Behälter VC eines synchronen Rahmens STM des synchronen Netzes einzufügen, und **dadurch gekennzeichnet, dass** der oder jeder Empfangsschaltkreis (10, 70, 73) Mittel (70) umfasst, um die auf dem synchronen Netz übertragenen synchronen Rahmen zu empfangen, Mittel (77), um ausgehend von den virtuellen Behältern VC des synchronen Rahmens STM die asynchronen Rahmen, welche sie enthalten, empfangene synchrone Rahmen genannt, zu überdecken, Mittel (82), um in jedem empfangenen asynchronen Rahmen das besondere Wort zu suchen, und, wenn es nicht gefunden wird, den empfangenen synchronen Rahmen nicht zu berücksichtigen, und, wenn es gefunden wird, ihn zu berücksichtigen, um das "Vorwort"-Feld wiederherzustellen, um den asynchronen Rahmen wiederzugeben, und Mittel (83, 10), um ihn auf das synchrone Empfangsnetz zu liefern.

3. System zum Übertragen asynchroner Rahmen des Typs Ethernet über ein synchrones Netz des Typs SDH (Synchronous Digital Hierarchy) nach Anspruch 2, **dadurch gekennzeichnet, dass** der Sendeschaltkreis einen Ethernet-Bauteil (40) umfasst, der vorgesehen ist, um den asynchronen Rahmen des asynchronen Netzes, zu dem er gehört, zu empfangen, und um ein binäres Datensignal (43b) und ein Taktgebersignal (43h) sowie ein Bestätigungssignal (43v) zu liefern, und einen PAL-Schaltkreis (41), der das Bestätigungssignal (43v) empfängt und, wenn das Bestätigungssignal (43) zeigt, dass der Rahmen nicht zu berücksichtigen ist, eine Abfolge von "0" liefert, und, wenn das Bestätigungssignal zeigt, dass der Rahmen zu berücksichtigen ist, das besondere Wort erzeugt und den asynchronen Ethernet-Rahmen teilweise ausgehend von seinem "Anfangs"-Feld speichert, wobei der PAL-Schaltkreis (41) daher das besondere Wort sowie den Teil des Rahmens an die anderen Mittel (30) liefert, um die asynchronen Rahmen in virtuelle Behälter VC einzufügen.

4. System zum Übertragen von asynchronen Rahmen des Typs Ethernet über ein synchrones Netz des Typs SDH (Synchronous Digital Hierarchy) nach Anspruch 2 oder 3, **dadurch gekennzeichnet, dass** der Empfangsschaltkreis einen Empfangsadapter (73) umfasst, der aus einem PAL-Schaltkreis (82) besteht, der einen Taktgeberausgang (85he), einen Datenausgang (85be) und einen Ausgang für ein Signal "gültig" (85v) hat, wobei der PAL-Schaltkreis (82) dazu vorgesehen ist, um das besondere Wort in dem empfangenen Rahmen zu suchen und das Signal "gültig" (85v) auf "0" zu setzen, wenn es nicht erkannt wird, und, wenn es erkannt wird, den empfangenen Rahmen zu speichern, den Wert zu lesen, der in dem "Längen"-Feld des Rahmens enthalten ist, einen Zähler zu aktivieren, der diesen Längenwert berücksichtigt, und das Signal "gültig" (85v) auf "1" zu stellen, um das "Vorwort"-Feld wiederherzustellen und dann die Wiedergabe des Rahmens zu vervollständigen, indem der Rest des Rahmens zu dem asynchronen Empfangsnetz präsentiert wird, und schließlich, um das Signal "gültig" (85v) wieder auf "0" zu setzen, sobald der Zähler "0" ist.

5. Sendeschaltkreis (10, 20, 30) eines Systems zum Übertragen asynchroner Rahmen des Typs Ethernet über ein synchrones Netz des Typs SDH (Synchronous Digital Hierarchy) **dadurch gekennzeichnet, dass** er Mittel (10) umfasst, um die asynchronen Rahmen des asynchronen Netzes, zu dem er gehört, zu empfangen, Mittel (41), um das "Vorwort"-Feld des asynchronen Rahmens durch ein besonderes Wort zu ersetzen, das von jedem Empfangsschaltkreis (10, 70, 73) eines asynchronen Empfangsnetzes der asynchronen Rahmen erkannt werden kann, und Mittel (30), um die asynchronen Rahmen in virtuelle Behälter VC eines synchronen Rahmens STM des asynchronen Netzes einzufügen.

6. Sendeschaltkreis nach Anspruch 5, **dadurch gekennzeichnet, dass** er ein Ethernet-Bauteil (40) umfasst, das dazu vorgesehen ist, den asynchronen Rahmen des asynchronen Netzes, zu dem er gehört, zu empfangen, und um ein binäres Datensignal (43b) und ein Taktgebersignal (43h) sowie ein Bestätigungssignal (43v) zu liefern, und einen PAL-Schaltkreis (41), der das Bestätigungssignal (43v) empfängt und der, wenn das Bestätigungssignal (43v) zeigt, dass der Rahmen nicht zu berücksichtigen ist, eine Abfolge von "0" liefert, und, wenn das Bestätigungssignal (43v) zeigt, dass der Rahmen zu berücksichtigen ist, das besondere Wort erzeugt und teilweise den asynchronen Ethernet-Rahmen ausgehend von seinem "Anfangs"-Feld speichert, wobei der PAL-Schaltkreis (41) daher das besondere Wort sowie den Teil des Rahmens an die Mittel (30) liefert, um die asynchronen Rahmen in virtuelle Behälter VC einzufügen.

7. Empfangsschaltkreis (10, 70, 73) eines Systems zum Übertragen asynchroner Rahmen des Typs Ethernet über ein synchrones Netz des Typs SDH (Synchronous Digital Hierarchy), wobei das System ferner mindestens einen Sendeschaltkreis (10, 20, 30) umfasst, der dazu vorgesehen ist, an ein asynchrones Netz (91, 92, 93, 94) angeschlossen zu werden, so dass darauf asynchrone Rahmen empfangen werden, wobei der Sendeschaltkreis Mittel (30) umfasst, um die asynchronen Rahmen in virtuelle Behälter VC eines synchronen Rahmens STM des synchronen Netzes mit dem "Vorwort"-Feld ersetzt durch ein besonderes Wort, das von dem Empfangsschaltkreis erkannt werden kann, einzufügen, **dadurch gekennzeichnet, dass** er Mittel (70) umfasst, um die auf dem synchronen Netz übertragenen synchronen Rahmen zu empfangen, Mittel (77), um ausgehend von den virtuellen Behältern VC des synchronen Rahmens STM asynchrone Rahmen, welche sie enthalten, empfangene synchrone Rahmen genannt, zu überdecken, Mittel (82), um in jedem empfangenen asynchronen Rahmen das besondere Wort zu suchen, und, wenn es nicht gefunden wird, den empfangenen synchronen Rahmen nicht zu berücksichtigen, und, wenn es gefunden wird, ihn zu berücksichtigen, um das "Vortwort"-Feld wiederherzustellen, um den asynchronen Rahmen wiederzugeben, und Mittel (83, 10), um ihn auf das synchrone Empfangsnetz zu liefern.

8. Empfangsschaltkreis nach Anspruch 7, **dadurch gekennzeichnet, dass** er einen Empfangsadapter (73) umfasst, der aus einem PAL-Schaltkreis (82) besteht, der einen Taktgeberausgang (85he), einen Datenausgang (85be) und einen Ausgang für ein Signal "gültig" (85v) hat, wobei der PAL-Schaltkreis (82) vorgesehen ist, um das besondere Wort in dem empfangenen Rahmen zu suchen, und das Signal "gültig" (85v) auf "0" zu setzen, wenn es nicht erkannt wird, und, wenn es erkannt wird, den empfangenen Rahmen zu speichern, den Wert zu lesen, der in dem "Längen"-Feld des Rahmens enthalten ist, einen Zähler zu aktivieren, der diesen Längenwert berücksichtigt, und das Signal "gültig" (85v) auf "1" zu setzen, um das "Vorwort"-Feld wiederherzustellen und dann die Wiedergabe des Rahmens zu vervollständigen, indem der Rest des Rahmens zu dem asynchronen Empfangsnetz präsentiert wird, und um schließlich das Signal "gültig" (85v) auf "0" zurückzusetzen, sobald der Zähler auf "0" ist.

## Claims

1. Method for transmission of asynchronous frames of the Ethernet type via a synchronous network of the SDH (Synchronous Digital Hierarchy) type, said transmission being effected between a transmitting circuit (10, 20, 30) of a transmitting asynchronous network (91, 92, 93, 94) and a receiving circuit (10, 70, 73) of said asynchronous network or of another asynchronous network of the same type, said asynchronous network being referred to as the destination asynchronous network (91, 92,93, 94), said asynchronous frames comprising in particular a "preamble" field, **characterised in that** it consists in the transmitting circuit (10, 20, 30) in receiving said asynchronous frames of said transmitting asynchronous network, inserting said asynchronous frames in virtual containers VC of a synchronous frame STM of said synchronous network having previously substituted said "preamble" field of said asynchronous frame with a particular word capable of being recognised by any receiving circuit (10, 70, 73) of a destination asynchronous network, transmitting said synchronous frame via said synchronous network, and in the receiving circuit (10, 70, 73) in receiving a synchronous frame transmitted over said synchronous network, recovering from the virtual containers VC of said synchronous frame STM said asynchronous frames which they contain, referred to as received synchronous frames, searching in each asynchronous frame received for said particular word and, if it is not found, not considering said synchronous frame received and, if it is found, considering said synchronous frame received, reconstituting said "preamble" field in order to restore said asynchronous frame and deliver it over said destination synchronous network.

2. System for transmission of asynchronous frames of the Ethernet type via a synchronous network of the SDH (Synchronous Digital Hierarchy) type, said system comprising at least one transmitting circuit (10, 20, 30) designed to be connected to an asynchronous network (91, 92, 93, 94) so as to receive there said asynchronous frames and at least one receiving circuit (10, 70, 73) designed to be connected to said asynchronous network or to another asynchronous network of the same type in order to deliver there the transmitted asynchronous frames, said asynchronous frames comprising in particular a "preamble" field, **characterised in that** said or each transmitting circuit (10, 20, 30) comprises means (10) for receiving said asynchronous frames of the asynchronous network to which it belongs, means (41) for substituting said "preamble" field of said asynchronous frame with a particular word capable of being recognised by any receiving circuit (10, 70, 73) of a destination asynchronous network and means (30) for inserting said asynchronous frames in virtual containers VC of a synchronous frame STM of said synchronous network and **in that** the or each receiving circuit (10, 70, 73) comprises means (70) for receiving the synchronous frames transmitted over said synchronous network, means (77) for recovering from the virtual containers VC of said synchronous frame STM said asynchronous frames which they contain, referred to as received synchronous frames, means (82) for searching in each asynchronous frame received for said particular word and, if it is not found, not considering said synchronous frame received and, if it is found, considering same, reconstituting said "preamble" field in order to restore said asynchronous frame and means (83, 10) for delivering it over said destination synchronous network.

3. System for transmission of asynchronous frames of the Ethernet type via a synchronous network of the SDH (Synchronous Digital Hierarchy) type, according to claim 2, **characterised in that** said transmitting circuit comprises an Ethernet component (40) designed to receive said asynchronous frame of the asynchronous network to which it belongs and to deliver a binary data signal (43b) and a clock signal (43h) and a validation signal (43v), and a circuit PAL (41) which receives said validation signal (43v) and which, when said signal (43v) shows that said frame is not to be considered, delivers a series of "0" and when the validation signal shows that said frame is to be considered, produces said particular word and partly memorises said asynchronous Ethernet frame from its "starting" field, said circuit PAL (41) then delivering said particular word and said portion of frame to said means (30) for inserting said asynchronous frames in virtual containers VC.

4. System for transmission of asynchronous frames of the Ethernet type via a synchronous network of the SDH (Synchronous Digital Hierarchy) type according to claim 2 or 3, **characterised in that** said receiving circuit comprises a receiving adapter (73) constituted by a circuit PAL (82) having a clock output (85he), a data output (85be) and an output for a "valid" signal (85v), said circuit PAL (82) being designed to search for said particular word in said frame received, and set the "valid" signal (85v) to "0" if it is not recognised and, if it is recognised, memorise the frame received, read the value contained in the "length" field of said frame, activate a counter which takes account of this length value and change the "valid" signal (85v) to "1", reconstitute the "preamble" field then complete the restoration of said frame by presenting the remainder of the frame to said destination asynchronous network, and lastly return said "valid" signal (85v) to "0" as soon as the counter is at "0".

5. Transmitting circuit (10, 20, 30) of a system for transmission of asynchronous frames of the Ethernet type via a synchronous network of the SDH (Synchronous Digital Hierarchy) type, **characterised in that** it comprises means (10) for receiving said asynchronous frames of the asynchronous network to which it belongs, means (41) for substituting said "preamble" field of said asynchronous frame with a particular word capable of being recognised by any receiving circuit (10, 70, 73) of a destination asynchronous network of the asynchronous frames, and means (30) for inserting said asynchronous frames in virtual containers VC of a synchronous frame STM of said synchronous network.

6. Transmitting circuit according to claim 5, **characterised in that** it comprises an Ethernet component (40) designed to receive said asynchronous frame of the asynchronous network to which it belongs and to deliver a binary data signal (43b) and a clock signal (43h) and a validation signal (43v), and a circuit PAL (41) which receives said validation signal (43v) and which, when said signal (43v) shows that said frame is not to be considered, delivers a series of "0" and when the validation signal shows that said frame is to be considered, produces said particular word and partly memorises said Ethernet asynchronous frame from its "starting" field, said circuit PAL (41) then delivering said particular word and said portion of frame to said means (30) for inserting said asynchronous frames in virtual containers VC.

7. Receiving circuit (10, 70, 73) of a system for transmission of asynchronous frames of the Ethernet type via a synchronous network of the SDH (Synchronous Digital Hierarchy) type, said system additionally comprising at least one transmitting circuit (10, 20, 30) designed to be connected to an asynchronous network (91, 92, 93, 94) so as to receive there asynchronous frames, said transmitting circuit comprising means (30) for inserting said asynchronous frames in virtual containers VC of a synchronous frame STM of said synchronous network with the "preamble" field substituted by a particular word capable of being recognised by said receiving circuit, **characterised in that** it comprises means (70) for receiving the synchronous frames transmitted over said synchronous network, means (77) for recovering from the virtual containers VC of said synchronous frame STM asynchronous frames which they contain, referred to as received synchronous frames, means (82) for searching in each asynchronous frame received for said particular word and, if it is not found, not considering said synchronous frame received and, if it is found, considering same, reconstituting said "preamble" field in order to restore said asynchronous frame and means (83, 10) for delivering it over said destination synchronous network.

8. Receiving circuit according to claim 7, **characterised in that** it comprises a receiving adapter (73) constituted by a circuit PAL (82) having a clock output (85he), a data output (85be) and an output for a "valid" signal (85v), said circuit PAL (82) being designed to search for said particular word in said frame received, and set the "valid" signal (85v) to "0" if it is not received and, if it is received, to memorise the frame received, read the value contained in the "length" field of said frame, activate a counter which takes account of this length value and change the "valid" signal (85v) to "1", reconstitute the "preamble" field then complete the restoration of said frame by presenting the remainder of the frame to said destination asynchronous network, and lastly return said "valid" signal (85v) to "0" as soon as the counter is at "0".
